(19) **Europäisches Patentamt / European Patent Office / Office européen des brevets**

(11) **EP 3 401 766 B1**

(12) **EUROPEAN PATENT SPECIFICATION**

(45) Date of publication and mention
of the grant of the patent:
**27.04.2022 Bulletin 2022/17**

(21) Application number: **18171618.4**

(22) Date of filing: **09.05.2018**

(51) International Patent Classification (IPC):
**H04N 21/422** (2011.01)    **H04N 21/431** (2011.01)
**G06F 3/0346** (2013.01)    **G06F 3/038** (2013.01)

(52) Cooperative Patent Classification (CPC):
**G06F 3/0346; G06F 3/038; H04N 21/42204;
H04N 21/42222; H04N 21/4312**

(54) **DISPLAY DEVICE FOR DISPLAYING A CURSOR**

ANZEIGEVORRICHTUNG ZUR ANZEIGE EINES CURSORS

DISPOSITIF D'AFFICHAGE PERMETTANT L'AFFICHAGE D'UN CURSEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.05.2017 JP 2017093281**

(43) Date of publication of application:
**14.11.2018 Bulletin 2018/46**

(73) Proprietor: **Funai Electric Co., Ltd.
Daito
Osaka 574-0013 (JP)**

(72) Inventors:
 • **MATSUMOTO, Masanori
  Osaka 574-0013 (JP)**
 • **KAMIKUBO, Ikuo
  Osaka 574-0013 (JP)**

(74) Representative: **Osha Liang
2, rue de la Paix
75002 Paris (FR)**

(56) References cited:
 **WO-A1-2016/200171    JP-A- 2014 204 240
 US-A1- 2011 169 734**

**Description**

BACKGROUND

Technical Field

One or more embodiments disclosed herein relates to a display device.

Related Art

In conventional display-device systems, a cursor (including a pointer) displayed on a display device can be operated by a remote controller (see patent literature 1).

The display-device system of patent literature 1 includes a display device and a remote controller that can remotely operate a pointer displayed on the display device. This display-device system has a function of correcting a position shift between a position a remote controller main body unit points to and a position of the pointer.

As an initial calibration for correcting the position shift, a controller of the remote controller calculates, by calculation formulas, a distance from a screen to the remote controller main body unit and a directional angle whereat the remote controller main body unit is positioned relative to a screen end based on an acquired result that is a sound sensing result (sound pressure information) of beacon sounds corresponding respectively to a screen center, a screen left end, and a screen right end and stores these in a memory.

Furthermore, after the initial calibration, in a situation where the screen center, the screen left end, and the screen right end are pointed to by the remote controller main body unit, based on an attitude sensing result of the remote controller main body unit by a gyro sensor, the controller acquires a sound sensing result of the beacon sounds and compares these with the sound sensing result corresponding to a time of the initial calibration. In a situation where, as a comparison result, these are shifted by no less than a predetermined value, the distance and the directional angle are calculated based on the newly acquired sound sensing result and the calculation formulas and the memory is overwritten with the calculated values.

As a result, a position shift in a positional relationship at the time of the initial calibration between the position the remote controller main body unit points to and the position of the pointer can be corrected.

Patent Literature 1: JP 2014-204240 A

SUMMARY

However, with patent literature 1, because calibration is performed again only in the situation where the remote controller main body unit points to the screen center and both ends, a position shift of the pointer arisen due to the distance between the remote controller and the screen changing or the like in a situation of continued use in a screen region other than these cannot be corrected. Moreover, for a user to attempt deliberate correction, the remote controller needs to be swung one time in directions thought to be the screen center and both ends; however, because of the shift, an inclination angle of the remote controller at the time of the initial calibration would need to be adopted, which presents a difficulty for the user. Moreover, at a time of the second calibration, time to acquire sounds from left and right speakers for three points - the screen center and both ends - is necessary; the remote controller needs to be held at each point for a certain extent of time, but it is not easy to hold the shifted cursor in this state.

One or more embodiments of the present invention provides a display device where convenience is improved when correcting a position shift between a position a remote controller points to and a position of a cursor.

A display device according to the present invention is defined in appended claim 1. Such a device includes a display and a controller that displays a cursor on the display based on information from a remote controller. The controller acquires information on a display position of the cursor of when the remote controller is oriented in a predetermined direction, information on an angle of the remote controller of when the remote controller is oriented in a direction of the cursor being displayed, information on a distance from a first position of a device main body to the remote controller, and information on a distance from a second position that differs from the first position of the device main body to the remote controller and controls the display position of the cursor based on each acquired information.

A calibration process can be performed on any cursor position in the display and a shift between a position the remote controller points to and the cursor position can be corrected. Moreover, the calibration process can be performed on only one cursor. Therefore, convenience can be increased.

The remote controller includes detector that detects the angle and the controller acquires the information on the angle from the detector.

The controller moves the cursor based on a detection result of the detector.

In one or more embodiments of the present invention, the controller, in a situation where a cursor position based on the detection result is outside a display region of the display, may display the cursor near an outer edge of the display region.

In one or more embodiments of the present invention, the cursor is stopped near the outer edge of the display region in a situation where the position the remote controller points to becomes outside the display region; therefore, a comfortable operational feeling can be provided to a user.

In one or more embodiments of the present invention, the controller may change a display aspect of the cursor according to a distance between the cursor position based on the detection result and the outer edge of the display region.

In one or more embodiments of the present invention, the display aspect of the cursor changes as the position the remote controller points to moves in a region outside the display region; therefore, an intuitive operational feeling can be obtained for the user.

In one or more embodiments of the present invention, the display aspect may be a flashing method or a display color (sixth configuration). To obtain the intuitive operation feeling, it is effective for the flashing method or the display color of the cursor to change.

In the present invention, further provided is a signal output unit that is disposed respectively in the first position and the second position, wherein a distance from the signal output unit to the remote controller is acquired based on a time for a signal output from the signal output unit to reach the remote controller.

The distance from each position to the remote controller can be obtained by a simple method.

In one or more embodiments of the present invention, the signal output unit may be a speaker. By this, a speaker that outputs content audio corresponding to content video displayed on the display can also be used as the signal output unit for measuring distance.

In one or more embodiments of the present invention, the display may include respective display regions of a plurality of display devices and the controller may determine which display device among the plurality of display devices to display the cursor on according to the cursor position based on the detection result.

In one or more embodiments of the present invention, the cursor can be displayed in a display region corresponding to the position the remote controller points to even in a situation where, in a so-called multi-display, the position the remote controller points to moves across different display regions.

In one or more embodiments of the present invention, defined may be global coordinates that define a position in the display and local coordinates that define a position in each display region and the cursor position, which is calculated as a global coordinate position, may be converted into a local coordinate position in the determined display device.

In one or more embodiments of the present invention, the cursor can be displayed based on the cursor position in local coordinates in the display device determined as the display device whereon to display the cursor.

Furthermore, the remote controller has a predetermined operator and the controller acquires the information on the display position of the cursor when the predetermined operator is pressed.

The controller acquires the angle of the remote controller, the distance from the first position to the remote controller, and the distance from the second position to the remote controller when pressing of the predetermined operator is released.

The calibration process can thus be performed by pressing the predetermined operator and afterward releasing the pressing and an operational feeling can be improved for the user.

The remote controller has a predetermined operator and the controller may fix the display position of the cursor while the remote controller is being oriented from the predetermined direction to the direction wherein the cursor is displayed based on an operation of the predetermined operator. According to such a configuration, because the display position of the cursor is fixed, orienting the remote controller in the direction of cursor display is facilitated.

In one or more embodiments of the present invention, the controller may associate the information on the display position of the cursor and the information on the angle of the remote controller to each other and store these in a memory.

One or more embodiments of the present invention provides a display device that improves convenience when correcting a position shift between a position a remote controller points to and a position of a cursor.

BRIEF DESCRIPTION OF DRAWINGS

Fig. 1 is a schematic view illustrating a configuration of a display-device system according to a first embodiment of the present invention.

Fig. 2 is a block configuration diagram of a display device according to the first embodiment of the present invention.

Fig. 3 is a block configuration view of a remote controller according to the first embodiment of the present invention.

Fig. 4A is a flowchart relating to cursor display control according to the first embodiment of the present invention.

Fig. 4B is a flowchart relating to cursor display control according to the first embodiment of the present invention.

Fig. 5 is a flowchart relating to a cursor alignment process according to the first embodiment of the present invention.

Fig. 6 is a flowchart relating to a cursor position computation process according to the first embodiment of the present invention.

Fig. 7A is a front view of the display device according to the first embodiment of the present invention.

Fig. 7B is a diagram for describing cursor position calculation according to the first embodiment of the present invention.

Fig. 8 is a schematic view illustrating a configuration of a display-device system according to a second embodiment of the present invention.

Fig. 9 is a block configuration diagram of a multi-display according to the second embodiment of the present invention.

Fig. 10A is a flowchart relating to cursor display control according to the second embodiment of the present invention.

Fig. 10B is a flowchart relating to cursor display control according to the second embodiment of the present invention.

Fig. 11 is a flowchart relating to a cursor alignment process according to a third example.

Fig. 12 is a diagram for describing cursor position calculation according to the third example.

## DETAILED DESCRIPTION

Embodiments of the present invention will be described in detail below with reference to the drawings. In the following description of embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid obscuring the invention.

<1. First Embodiment>

<1.1 Configuration of Display-Device System>

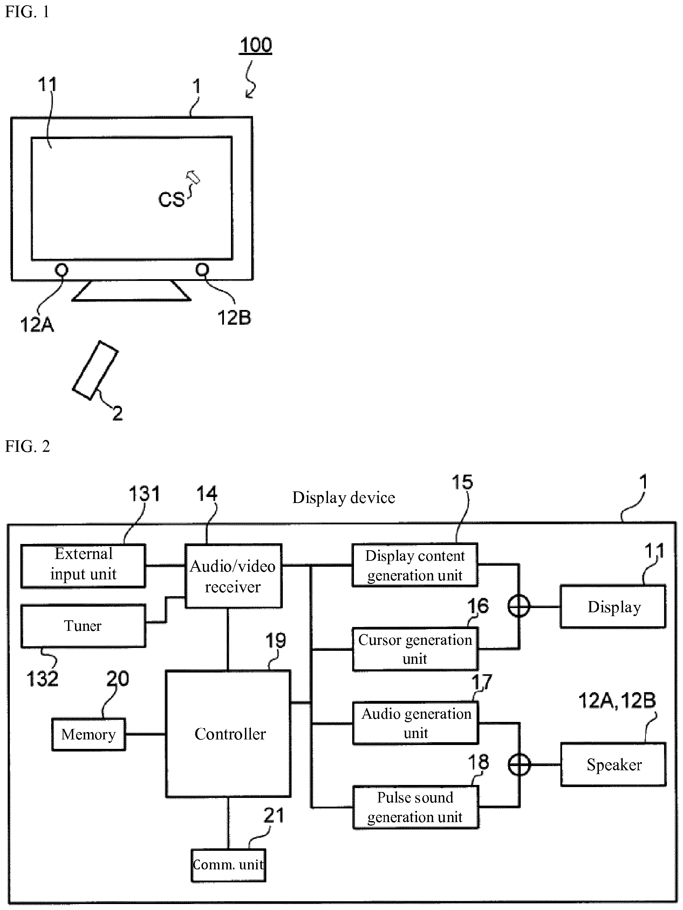

FIG. 1 is a schematic view illustrating a configuration of a display-device system 100 according to a first embodiment of the present invention. The display-device system 100 illustrated in FIG. 1 includes a display device 1 and a remote controller 2 that can remotely operate the display device 1. In the display-device system 100, the remote controller 2 can perform a remote operation of displaying a cursor CS on a display 11 of the display device 100 in a position pointed to by the remote controller 2. The display device 1 is specifically configured as a television device, a PC monitor, digital signage, or the like.

The display device 1 has the display 11, which is rectangular and disposed on a front-face side, and speakers 12A, 12B disposed on the front-face side. The speakers 12A, 12B are respectively disposed in positions corresponding to a left side and a right side of a central position in a left-right direction of the display 11 and are configured to generate audio forward of the display device 1.

FIG. 2 is a block configuration diagram of the display device 1. As illustrated in FIG. 2, the display device 1 has the display 11; the speakers 12A, 12B; an external input unit 131; a tuner 132; an audio/video receiver 14; a display content generation unit 15; a cursor generation unit 16; an audio generation unit 17; a pulse sound generation unit 18; a controller 19; a memory 20; and a communication unit 21. Each unit of the display device 1 is controlled by the controller 19.

The audio/video receiver 14 is configured to receive a video signal and an audio signal from a disc device or the like that is not illustrated via the external input unit 131. Moreover, the audio/video receiver 14 is configured to receive broadcast audio/video signals via the tuner 132. The display content generation unit 15 is configured to generate a display content (display video) based on the video signal received by the audio/video receiver 14. The display content generated by the display content generation unit 15 is displayed by the display 11.

The audio generation unit 17 is configured to generate an output audio signal based on the audio signal received by the audio/video receiver 14. The audio signal generated by the audio generation unit 17 is output as audio by the speakers 12A, 12B. That is, the pair of speakers 12A, 12B is configured to output audio corresponding to the video displayed on the display 1.

The communication unit 21 is compatible with, for example, Bluetooth (registered trademark), infrared communication, or the like and is configured to be able to communicate a signal with the remote controller 2. The cursor generation unit 16 is configured to generate the cursor CS displayed on the display 11 based on a signal received by the communication unit 21 from the remote controller 2. The pulse sound generation unit 18 is configured to generate a pulse sound that is output from the speakers 12A, 12B based on a signal received by the communication unit 21 from the remote controller 2. The pulse sound is a sound outside audible range.

The memory 20 is configured by a nonvolatile memory that maintains storage information even if the display device 1 is turned off and is stored with various information by the controller 19.

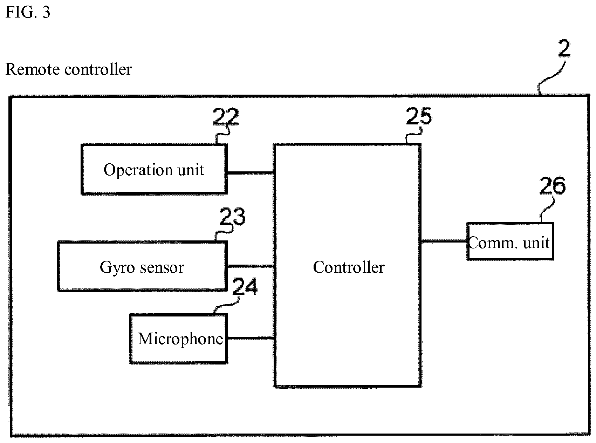

FIG. 3 is a block configuration diagram of the remote controller 2. As illustrated in FIG. 3, the remote controller 2 has an operation unit 22, a gyro sensor 23, a microphone 24, a controller 25, and a communication unit 26.

The operation unit 22 has a plurality of operation buttons or the like that is not illustrated and outputs an operation signal according to an operated content. The gyro sensor 23 is a sensor that senses an attitude angle of a main body unit of the remote controller 2. The microphone 24 is configured to acquire the pulse sound output from the speakers 12A, 12B of the display device 1.

The controller 25 controls each unit of the remote controller 2. The communication unit 26 is configured to perform communication with the communication unit 21 of the display device 1. The operation signal output by the operation unit 22 and a sensing result by the gyro sensor 23 are sent to the display device 1 by the communication unit 26 via the controller 25.

<1.2 Cursor Display Control>

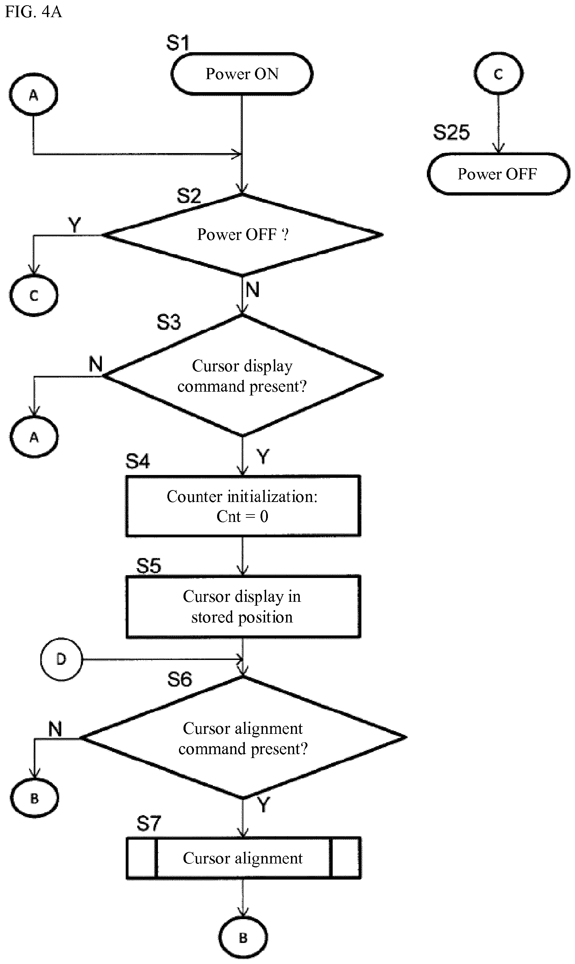

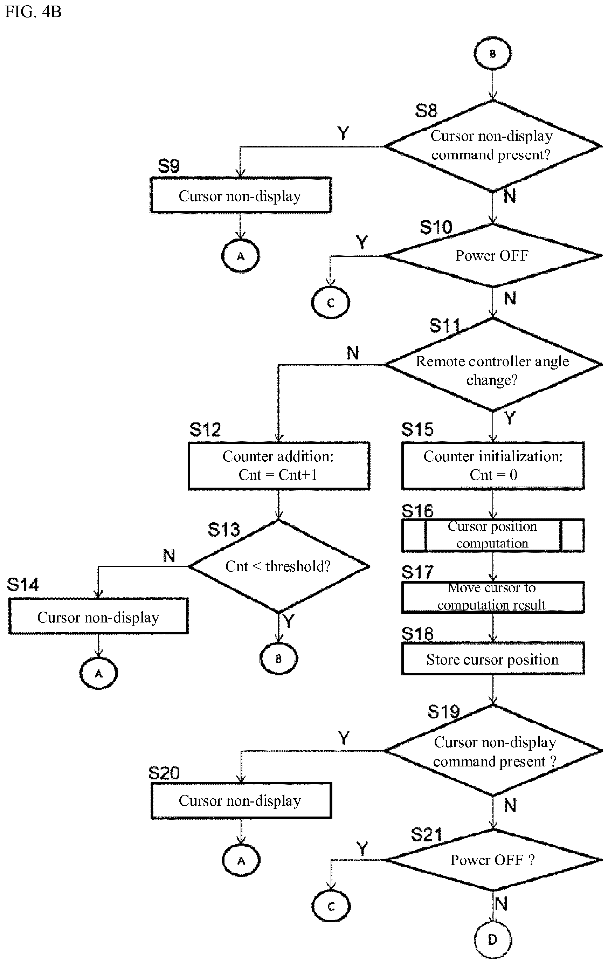

Next, cursor display control in the display-device system 100 is described with reference to the flowcharts illustrated in FIGS. 4A and 4B.

First, at step S1 (FIG. 4A), when a power-on operation is performed in the operation unit 22 of the remote controller 2, an operation signal thereof is sent from the communication unit 26 to the communication unit 21 of the display device 1. Then, the controller 19 performs a control of turning on the display device 1.

Next, the flow proceeds to step S2, and the controller 19 determines whether a power-off operation is performed in the operation unit 22. In a situation where the power-off operation is performed (Y at step S2), the flow proceeds to step S25 and the controller 19 performs a control of turning off the display device 1. At step S2, in a situation where no power-off operation is performed (N at step S2), the flow proceeds to step S3.

At step S3, the controller 19 determines whether a cursor display command operation is performed in the operation unit 22. In a situation where no cursor display command operation is performed (N at step S3), the flow returns to step S2. Meanwhile, in a situation where the cursor display command operation is performed (Y at step S3), the flow proceeds to step S4.

At step S4, the controller 19 initializes a counter. Then, the flow proceeds to step S5, and the controller 19 instructs the cursor generation unit 16 to display the cursor CS in a position of a cursor position stored in the memory 20. By this, the cursor CS is displayed in a corresponding position on the display 11. The cursor position is defined as a position of twodimensional coordinates, in a screen left-right direction and a screen up-down direction of the display 11.

Next, the flow proceeds to step S6, and the controller 19 determines whether a command operation of performing a cursor alignment process, which is a calibration process of matching a display position of the cursor CS with the position the remote controller 2 points to, is performed in the operation unit 22. This cursor alignment command operation is performed by pressing a predetermined button in the operation unit 22.

In a situation where no cursor alignment command operation is performed (N at step S6), the flow proceeds to step S8 that is described below. Meanwhile, in a situation where the cursor alignment command operation is performed (Y at step S6), the flow moves to step S7, the cursor alignment process.

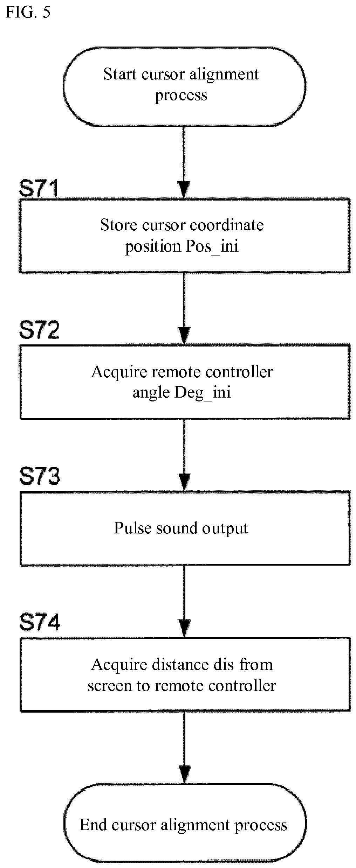

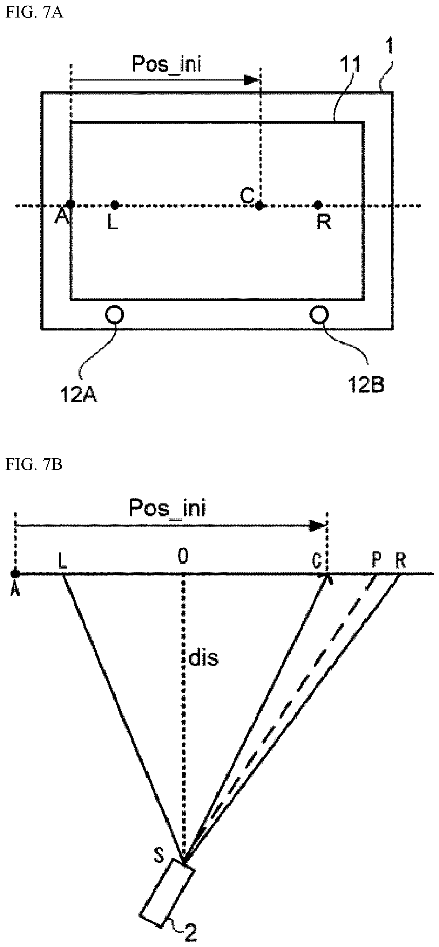

A flow of the cursor alignment process of step S7 is illustrated in the flowchart of FIG. 5. When the cursor alignment process is started, first, at step S71, the controller 19 stores a cursor coordinate position Pos_ini indicating a current position of the cursor CS in the screen left-right direction in the memory 20. Here, in FIG. 7A, the current position of the cursor CS in the screen left-right direction is represented as a cursor position C. In FIG. 7A, positions L, R respectively indicate positions of the speakers 12A, 12B in the screen left-right direction. A reference point of the cursor coordinate position Pos_ini is predetermined, but as one example, in FIG. 7A, a left end of a display region of the display 1 is made to be a reference point A. That is, the cursor coordinate position Pos_ini is a distance from the reference point A to the cursor position C.

Here, the user grips the main body unit of the remote controller 2 while pressing the predetermined button for the cursor alignment command operation so the position the remote controller 2 points to becomes the position of the cursor CS currently being displayed. This state is illustrated in FIG. 7B. FIG. 7B is a diagram where FIG. 7A is viewed from above. FIG. 7B illustrates the state where the remote controller 2 is gripped so the position the remote controller 2 points to becomes the cursor position C in the screen left-right direction of the display 1. In the state where the predetermined button for the cursor alignment command operation is pressed, the cursor position C is fixed.

Then, pressing of the predetermined button is released in a state where the user is gripping the remote controller 2 as above. Then, at step S72, the controller 25 of the remote controller 2 senses the release of the pressing and sends a remote controller angle Deg_ini, which is an angle in a left-right direction of the remote controller 2 sensed by the gyro sensor 23, to the display device 1 via the communication unit 26 and the controller 19 acquires the remote controller angle Deg_ini. The controller 19 associates the acquired remote controller angle Deg_ini with the cursor coordinate position Pos_ini and stores this in the memory 20. With the remote controller angle Deg_ini, an angle when the remote controller 2 is facing a predetermined direction is made to be 0 degrees; indicated is an angle value relative to this predetermined direction.

Next, the flow proceeds to step S73, and the controller 25 sends a left-side sound output command to the display device 1 via the communication unit 26. The controller 19 receives this and instructs the pulse sound generation unit 18 to output the pulse sound from the speaker 12A. The controller 25 starts counting elapsed time when the left-side sound output command is sent and measures an elapsed time until the pulse sound output from the speaker 12A is acquired by the microphone 24. Next, the controller 25 sends a right-side sound output command to the display device 1 via the communication unit 26. The controller 19 receives this and instructs the pulse sound generation unit 18 to output the pulse sound from the speaker 12B. The controller 25 starts counting elapsed time when the right-side sound output command is sent and measures an elapsed time until the pulse sound output from the speaker 12B is acquired by the microphone 24.

By this, the controller 25 can acquire times necessary for sounds corresponding to a left-side sound and a right-side sound to arrive. Based on these arrival times, respective distances from the speakers 12A, 12B to the remote controller 2 can be calculated. In terms of in FIG. 7B, calculated is LS, which is a distance from the position L of the speaker 12A on the left side to a position S of the remote controller 2, and RS, which is a distance from the position R of the speaker 12B on the right side to the position S of the remote controller 2.

At step S74, the controller 19 acquires each arrival time sent by the controller 25 via the communication unit 26 and calculates each distance LS, RS above. Here, defining an area of a triangle SLR as T, formula (1) below is established according to Heron's formula:

$$T = \sqrt{s(s - LS)(s - RS)(s - LR)}. \qquad (1)$$

However, s = (LS+RS+LR)/2.

Furthermore, formula (2) below is also established for T:

$$T = LR \cdot dis/2. \qquad (2)$$

By formula (1) and formula (2), formula (3) below is established:

$$dis = 2T/LR = 2/LR \times \sqrt{s(s - LS)(s - RS)(s - LR)}. \quad (3)$$

Because the distances LS, RS are calculated and known and the distance LR-a distance between the position L of the speaker 12A and the position R of the speaker 12B-is also known, the distance dis can be calculated by formula (3) above.

The controller 19 calculates the distance dis by such a method. That is, at step S74, the controller 19 acquires the distance dis-a distance from the screen to the remote controller 2. The distance dis is associated with the remote controller angle Deg_ini and the cursor coordinate position Pos_ini and stored in the memory 20 by the controller 19.

At step S74, the cursor alignment process ends. In this manner, the user, by pressing the predetermined button of the remote controller 2, grasping the remote controller in a direction of the display position of the cursor CS in the state where the display position of the cursor CS is fixed, and releasing pressing of the predetermined button, can acquire the cursor coordinate position Pos_ini, the remote controller angle Deg_ini, and the distance dis. These parameters are used in a computing process of the cursor position that is described below and can match the position the remote controller 2 points to and the display position of the cursor CS. That is, the calibration process is performed by the processes of steps S71 to S74. Moreover, the controller 19 stores each parameter above in the memory 20.

According to another example of one or more embodiments of the present invention, the processes of step S7 may be started when a first predetermined button of the remote controller 2 is pressed, steps S72 to S74 being processed when the remote controller is gripped in the direction of the display position of the cursor Cs and the first predetermined button is pressed again. That is, the first predetermined button serves as a button for cursor fixing. Moreover, instead of again pressing the first predetermined button, a second predetermined button that differs from the first predetermined button may be pressed. Moreover, an operator in the remote controller is not limited to hardware such as a button and may be, for example, a key or the like as an image that is operated by a touch panel.

When the cursor alignment process at step S7 ends, the flow proceeds to step S8 (FIG. 4B) and the controller 19 determines whether a cursor non-display command operation is performed in the operation unit 22. In a situation where the cursor non-display command operation is performed (Y at step S8), the flow proceeds to step S9 and the controller 19 instructs the cursor generation unit 16 to perform non-display of the cursor CS. By this, the cursor CS is no longer displayed on the display 11. Afterward, the flow returns to step S2.

Meanwhile, in a situation where no cursor non-display command operation is performed at step S8 (N at step S8), the flow proceeds to step S10 and the controller 19 determines whether the power-off operation is performed in the operation unit 22. In a situation where the power-off operation is performed (Y at step S10), the flow proceeds to step S25 and the display device 1 is turned off.

Meanwhile, in a situation where no power-off operation is performed at step S10 (N at step S10), the flow proceeds to step S11. At step S11, the controller 19 determines whether a change is arisen in an attitude angle of the remote controller 2 based on the sensing result of the gyro sensor 23. This angle change includes an angle in a left-right direction and an up-down direction of the remote controller 2 main body unit. It is determined that an angle change is arisen in a situation where a change is arisen in at least one of these angles.

In a situation where no change is arisen in the attitude angle of the remote controller 2 (N at step S11), the flow proceeds to step S12 and the controller 19 adds to the counter. Then, the flow proceeds to step S13 and the controller 19 determines whether the counter is lower than a threshold. In a situation of being lower than the threshold (Y at step S13), the flow returns to step S8.

Meanwhile, in a situation where no change is arisen in the attitude angle of the remote controller 2 and, by addition of the counter accumulating, the counter is no less than the threshold (N at step S13), the flow proceeds to step S14 and the controller 19 instructs the cursor generation unit 16 to perform non-display of the cursor CS. By this, the cursor CS is no longer displayed on the display 11. Afterward, the flow returns to step S2. By this, in a situation where the remote controller 2 is, for example, left placed on a desk, non-display of the cursor CS can be automatically performed.

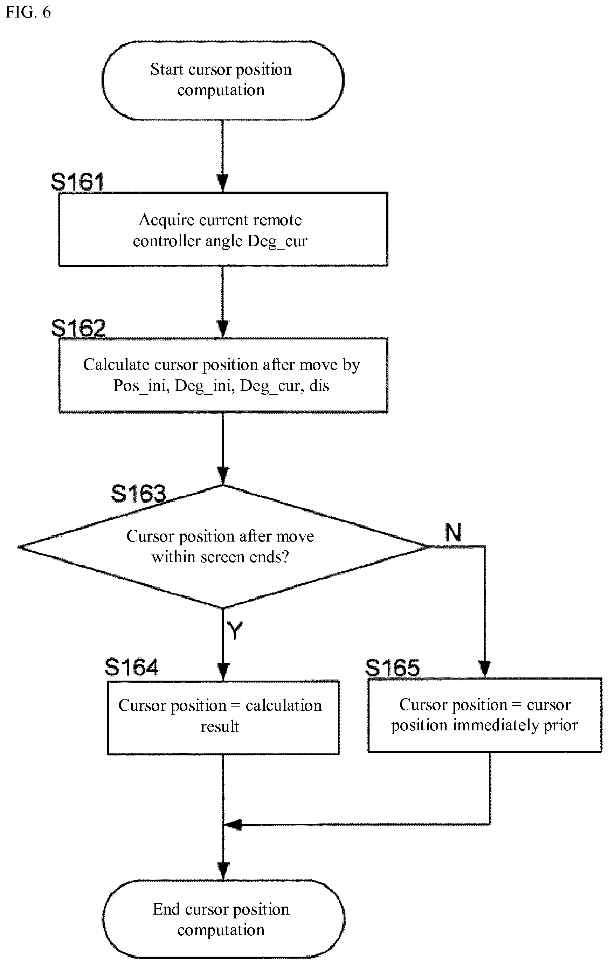

Meanwhile, at step S11, in a situation where a change is arisen in the attitude angle of the remote controller (Y at step S11), the flow proceeds to step S15 and the controller 19 initializes the counter. Then, the flow proceeds to step S16. At step S16, the controller 19 performs a cursor position computation process that computes the display position of the cursor CS. Here, coordinate positions of the cursor CS in the screen left-right direction and the screen up-down direction are computed; however, described here using FIG. 6 is the computation of the coordinate position in the screen left-right direction. Computation of the coordinate position in the screen up-down direction is performed based on an angle in the up-down direction of the remote controller 2 sensed by the gyro sensor 23.

FIG. 6 is a flowchart illustrating a flow of processes of computing the coordinate position of the cursor CS in the screen left-right direction. When the processes of FIG. 6 are started, first, at step S161, the controller 19 acquires a remote controller angle Deg_cur, which is a current angle of the remote controller 2 in the left-right direction, based on the sensing result of the gyro sensor 23. With the remote controller angle Deg_cur, similarly to the remote controller angle Deg_ini, the angle when the remote controller 2 is facing the predetermined direction is made to be 0 degrees; indicated is an angle value relative to this predetermined direction.

Then, the flow proceeds to step S162, and the controller 19 computes the cursor position based on the cursor coordinate position Pos_ini, the remote controller angle Deg_ini, and the distance dis stored in the memory 20 and the acquired remote controller degree Deg_cur.

Here, calculation formulas that compute a cursor position P are described with reference to FIG. 7B. By the Pythagorean theorem, formula (4) below is established:

$$LO = \sqrt{(LS^2 - dis^2)}. \qquad (4)$$

Moreover,

$$OC = LC - LO, \qquad (5)$$

and

$$LC = Pos\_ini - AL. \qquad (6)$$

By formula (4) to formula (6), formula (7) below is established:

$$OC = (Pos\_ini - AL) - \sqrt{(LS^2 - dis^2)}. \quad (7)$$

Meanwhile, because tan($\angle$CSO) = OC/dis,

$$\angle CSO = \tan^{-1}(OC/dis). \quad (8)$$

Moreover,

$$\angle PSO = \angle CSO + (Deg\_cur - Deg\_ini). \ (9)$$

Here,

$$\tan(\angle PSO) = OP/dis. \quad (10)$$

Substituting formula (9) into formula (10),

$$\tan(\angle CSO + (Deg\_cur - Deg\_ini)) = OP/dis. \ (11)$$

Substituting formula (8) into formula (11),

$$\tan(\tan^{-1}(OC/dis) + (Deg\_cur - Deg\_ini)) = OP/dis. \quad (12)$$

Modifying formula (12),

$$OP = dis \times \tan(\tan^{-1}(OC/dis) + (Deg\_cur - Deg\_ini)). \quad (13)$$

Here,

$$AP = AL + LO + OP. \quad (14)$$

Substituting formula (4) and formula (13) into formula (14),

$$AP = AL + \sqrt{(LS^2 - dis^2)} + dis \times \tan(\tan^{-1}(OC/dis) + (Deg\_cur - Deg\_ini)). \quad (15)$$

Here, OC in formula (15) can be calculated from formula (7). Therefore, the cursor position P can be computed based on formula (15) as a distance from the reference point A.

Next, the flow proceeds to step S163, and the controller 19 determines whether the cursor position calculated above is within both ends, left and right in the screen, of the display 1-that is, whether it is within the display region. In a situation where it is within both ends, left and right, in the screen (Y at step S163), the flow proceeds to step S164 and the cursor position is determined as being the calculation result above. Meanwhile, in a situation where the cursor position is outside both ends, left and right, in the screen (N at step S163), the flow proceeds to step S165 and the cursor position is determined not as the calculation result above but as a cursor position immediately prior (stored in the memory 20).

The cursor position computation process ends by step S164 or S165. When the cursor position is computed in this manner, the flow proceeds to step S17 and the controller 19 instructs the cursor generation unit 16 to display the cursor CS on the display 1 in the computed cursor position. By this, the cursor CS is displayed in the computed cursor position.

Then, at step S18, the controller 19 stores the computed cursor position in the memory 20. This storing is performed by overwriting.

Next, at step S19, the controller 19 determines whether the cursor non-display command operation is performed in the operation unit 22. In a situation where the cursor non-display command operation is performed (Y at step S19), the flow proceeds to step S20 and the controller 19 instructs the cursor generation unit 16 to perform non-display of the cursor CS. By this, the cursor CS is no longer displayed on the display 11. Afterward, the flow returns to step S2.

Meanwhile, in a situation where no cursor non-display command operation is performed (N at step S19), the flow proceeds to step S21 and the controller 19 determines whether the power-off operation is performed in the operation unit 22. In a situation where the power-off operation is performed (Y at step S21), the flow proceeds to step S25 and the display device 1 is turned off. The cursor position stored at step S18 undergoes cursor non-display at step S20 and afterward, in a situation where the cursor display command operation is performed (Y at step S3), is used as the display position of the cursor CS (step S5). Alternatively, in a situation where the power is turned off at step S21, the cursor position stored at step S18 is used as the display position of the cursor CS in a situation where the power is afterward turned on (step S5).

Meanwhile, in a situation where no power-off operation is performed at step S21 (N at step S21), the flow returns to step S6 and it is determined whether the cursor alignment command operation is performed in the operation unit 22.

Thus, according to one or more embodiments of the present invention, even in a situation where the display position of the cursor CS is shifted from the position the remote controller 2 points to due to, for example, the distance between the remote controller 2 and the screen changing, by performing the cursor alignment command operation, the cursor alignment process (calibration process) is performed and the cursor position is afterward calculated and displayed based on a processing result thereof; therefore, the position shift can be corrected. At this time, the cursor alignment process can only be performed on the current cursor position; therefore, there is no need, as is conventionally the case, to match the remote controller to positions of three points (a center and both ends of a screen). Moreover, the cursor alignment process can be performed on any cursor position in the display screen. Therefore, a convenience for the user can be increased.

In a situation where the processes illustrated in FIG. 6 (cursor position computation process of step S16) are performed and the calculated cursor position is positioned outside both ends of the screen, by step S165, the cursor position is determined as the cursor position immediately prior. Therefore, in a situation where the remote controller 2 is rotated in one direction and the calculated cursor position becomes outside the display region, while the cursor position per se is virtually determined, the cursor CS that is actually displayed is fixed at a screen end. Then, if the remote controller 2 is rotated in a reverse direction and the calculated cursor position becomes within the display region, the cursor is displayed in the calculated position (step S164). At this time, no shift arises between the position the remote controller 2 points to and the display position of the cursor CS. Therefore, a comfortable cursor operability can be realized for the user.

In the processes illustrated in FIG. 6, in a situation where the calculated cursor position is outside a screen end (N at step S163), the controller 19 may acquire a distance of the calculated cursor position from the screen end. In this situation, in display of the cursor at step S17 (that is, display at the screen end), the controller 19 instructs the cursor generation unit 16 to display the cursor CS by a flashing method or by color display according to the acquired distance. If the flashing method is adopted, this is, for example, increasing a flashing speed the greater the acquired distance.

By this, because the farther the position the remote controller 2 points to is outside the display region, the more a display aspect of the cursor CS fixed at the screen end changes, an intuitive operational feeling can be realized for the user.

Furthermore, in the cursor alignment process, the pulse sound output from each speaker is used to acquire the distances between each speaker 12A, 12B and the remote controller 2 (distances LS, RS in FIG. 7B), but this is not limited thereto. For example, each distance above may be acquired by providing light emitting units that emit lights of mutually differing colors on the left side and the right side of the central position in the left-right direction of the display 11, providing a light receiver to the remote controller 2, and measuring times for the lights of each color to reach the remote controller 2.

<2. Second Embodiment>

<2.1 Configuration of Multi-Display>

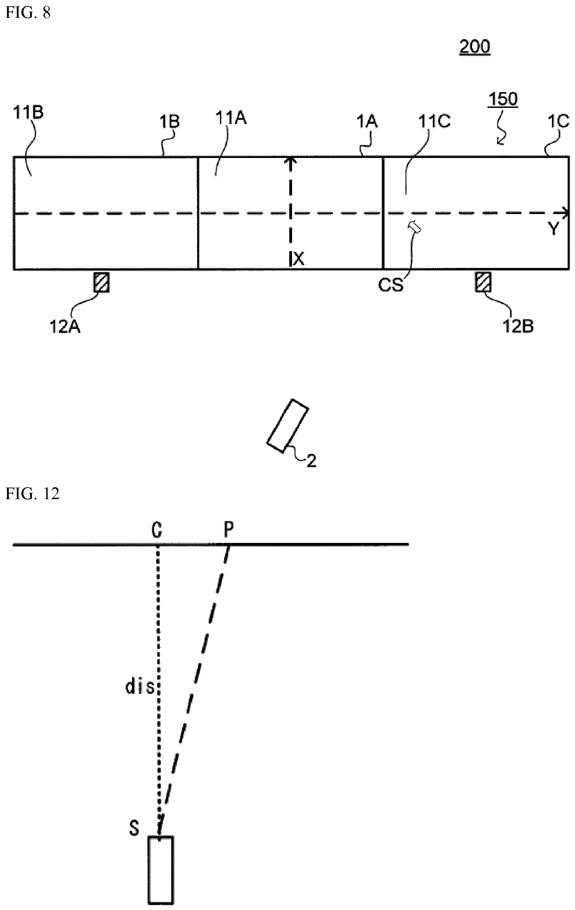

Next, a second embodiment of the present invention is described. FIG. 8 is a schematic view illustrating a configuration of a display-device system 200 according to the second embodiment of the present invention. The display-device system 200 illustrated in FIG. 8 is configured from a multi-display 150, which has a first display device 1A, a second display device 1B, and a third display device 1C, and the remote controller 2. The multi-display 150 is configured as, for example, digital signage or the like. The multi-display 150 is also provided with the speakers 12A, 12B.

A display 11A of the first display device 1A, a display 11B of the second display 1B, and a display 11C of the third display device 1C are arranged in a horizontal direction (left-right direction). That is, the multi-display 150 performs display by three screens lined up in the horizontal direction. Moreover, the speakers 12A, 12B are respectively disposed on a left side and a right side of a central position in a left-right direction of an entire display screen (screen configured from the displays 11A to 11C) of the multi-display 150. In the display-device system 200, a position of the cursor CS displayed on the entire display screen can be remotely operated by the remote controller 2. A configuration of the remote controller 2 is similar to that in the first embodiment of the present invention as shown in FIG. 3.

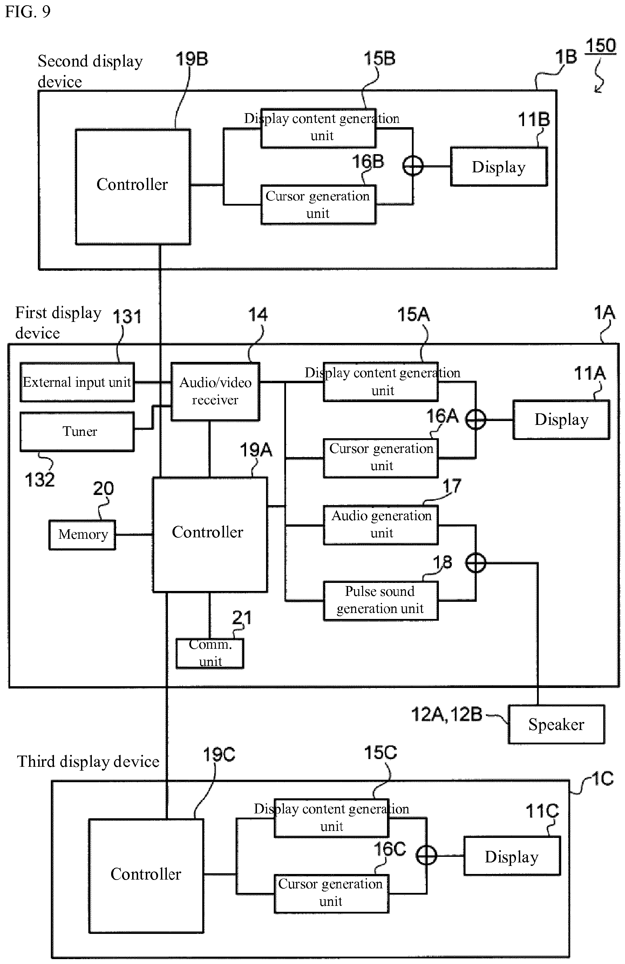

FIG. 9 is a block configuration diagram of the multi-display 150. As illustrated in FIG. 9, the multi-display 150 has the first display device 1A, the second display device 1B, the third display device 1C, and the speakers 12A, 12B.

The first display device 1A has the display 11A, the external input unit 131, the tuner 132, the audio/video receiver 14, a display content generation unit 15A, a cursor generation unit 16A, the audio generation unit 17, the pulse sound generation unit 18, a controller 19A, the memory 20, and the communication unit 21. The speakers 12A, 12B are connected to the audio generation unit 17 and the pulse sound generation unit 18 outside the display device 1A.

The second display device 1B has the display 11B, a display content generation unit 15B, a cursor generation unit 16B, and a controller 19B. The third display device 1C has the display 11C, a display content generation unit 15C, a cursor generation unit 16C, and a controller 19C.

The first display device 1A is of a configuration similar to that of the display device 1 of the first embodiment of the present invention as shown in FIG. 2. The controller 19A can communicate with the controllers 19B, 19C. The communication unit 21 communicates a signal between the remote controller 2 and the communication unit 26. The display content generation unit 15A is configured to generate video to be displayed on the display 11A, which is positioned in a center of the entire display screen, among the video received by the audio/video receiver 14. The display content generation unit 15B is configured to generate video to be displayed on the display 11B, which is positioned on a left end of the entire display screen, among the video received by the audio/video receiver 14. The display content generation unit 15C is configured to generate video to be displayed on the display 11C, which is positioned on a right end of the entire display screen, among the video received by the audio/video receiver 14. By this, video as one content is displayed on the entire display screen configured by the displays 11A to 11C.

At this time, the audio generation unit 17 is configured to generate the output audio signal based on the audio signal received by the audio/video receiver 14. The audio signal generated by the audio generation unit 17 is output as audio by the speakers 12A, 12B. That is, the pair of speakers 12A, 12B is configured to output audio corresponding to the video displayed on the entire display screen.

Furthermore, the cursor generation units 16A to 16C are each configured to generate the cursor CS to be displayed on the displays 11A to 11C. The cursor generation units 16A to 16C are controlled so when any one thereof generates the cursor CS, the rest do not generate the cursor CS.

<2.2 Cursor Display Control>

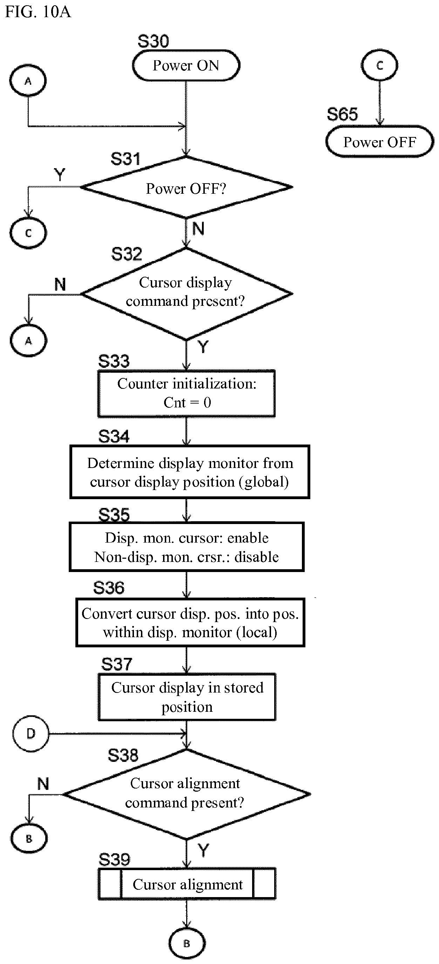

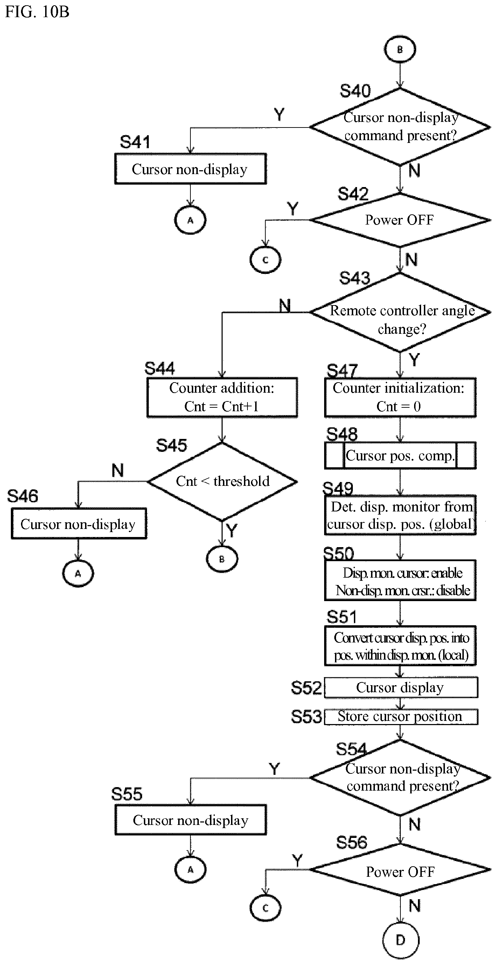

Next, cursor display control in such a display-device system 200 according to one or more embodiments of the present invention is described with reference to the flowcharts illustrated in FIGS. 10A and 10B. Because processes of the present flowcharts are fundamentally similar to the processes according to the first embodiment described above (FIG. 4A, FIG. 4B), described in particular are processes unique to the present embodiment while simplifying description as appropriate.

At step S30 (FIG. 10A), when the power-on operation is performed in the operation unit 22 of the remote controller 2, by the communication unit 21 receiving the operation signal, the controller 19A performs a control of turning on the multi-display 150.

Afterward, in a situation where no power-off operation is performed (N at step S31) and the cursor display command operation is performed (Y at step S32), the flow proceeds to step S33, the counter is initialized, and the flow proceeds to step S34.

At step S34, the controller 19A reads the cursor position stored in the memory 20. Here, as illustrated in FIG. 8, a position of the cursor CS in global coordinates, where an X coordinate and a Y coordinate are respectively in an up-down direction and the left-right direction in the entire display screen of the multi-display 150, is defined. The cursor position stored in the memory 20 is a coordinate position in these global coordinates.

At step S34, the controller 19A specifies a display monitor to be the display device whereon the cursor is displayed from among the display devices 1A to 1C based on which display region among the displays 11A to 11C the cursor position read from the memory 20 belongs to.

Next, at step S35, in a situation where the display monitor is the display device 1A, the controller 19A enables cursor display for itself by deeming the other display devices 1B, 1C as non-display monitors and notifies cursor display disablement to each of the other controllers 19B, 19C. Moreover, in a situation where the display monitor is the display device 1B or the display device 1C, the controller 19A notifies cursor display enablement to the controller 19B or 19C corresponding to the display monitor, disables cursor display for itself, and notifies cursor display disablement to the controller 19B or 19C corresponding to the non-display monitor.

Then, at step S36, the controller among the controllers 19A to 19C for which cursor display is enabled converts the cursor position read from the memory 20 from the global coordinates to local coordinates. Here, local coordinates are coordinates defined within individual display regions of the displays 11A to 11C. The controller among the controllers 19A to 19C for which cursor display is disabled instructs the corresponding cursor generation unit 16A, 16B, or 16C to generate no cursor.

Next, at step S37, the controller among the controllers 19A to 19C for which cursor display is enabled notifies the corresponding cursor generation unit 16A, 16B, or 16C of the cursor position converted into the local coordinates and instructs generation of the cursor. By this, the cursor is displayed on any one of the display devices that is the display monitor.

Next, the flow proceeds to step S38 and the controller 19A determines whether the cursor alignment command operation is performed; if this is performed (Y at step S38), the flow moves to step S39, execution of a cursor alignment process.

The cursor alignment process here is similar to the process according to the first embodiment of the present invention as shown in FIG. 5. In particular, at step S71, a current cursor position in global coordinates is stored as the cursor coordinate position Pos_ini. Moreover, at step S73, the pulse sound generation unit 18 outputs the pulse sound from the speakers 12A, 12B disposed respectively on the left side and the right side of the central position in the left-right direction of the entire display screen. Each parameter acquired in the cursor alignment process is stored in the memory 20.

Afterward, in a situation where there is no cursor non-display command operation (N at step S40), there is no power-off operation (N at step S42), and a change is arisen in the attitude angle of the remote controller (Y at step S43), the flow proceeds to step S47, the counter is initialized, and the flow moves to step S48, execution of a cursor position computation process.

The cursor position computation process here is similar to the process according to the first embodiment of the present invention as shown in FIG. 6. However, at step S162, the cursor position in global coordinates is calculated. Moreover, at step S163, it is determined whether the calculated cursor position is within both ends, left and right, of the entire display screen-that is, whether is it within the display region.

Then, at steps S49 to S51, processes similar to those at steps S34 to S36 described above are performed, and at step S52, the cursor is displayed on the display device deemed to be the display monitor from among the display devices 1A to 1C. Then, at step S53, the computed cursor position (global coordinates) is stored in the memory 20.

According to the second embodiment of the present invention as above, the cursor alignment process (calibration process) can be performed on the cursor CS in any display position in the entire display screen configured from a plurality of displays. Moreover, when the remote controller 2 is rotated in one direction, the cursor CS, which is displayed in the position the remote controller 2 points to, is displayed while moving across adjacent display devices and has the position thereof fixed upon reaching an end of the entire display screen.

The various modified examples of the first embodiment of the present invention described above are similarly applicable to the second embodiment of the present invention.

<3. Third example>

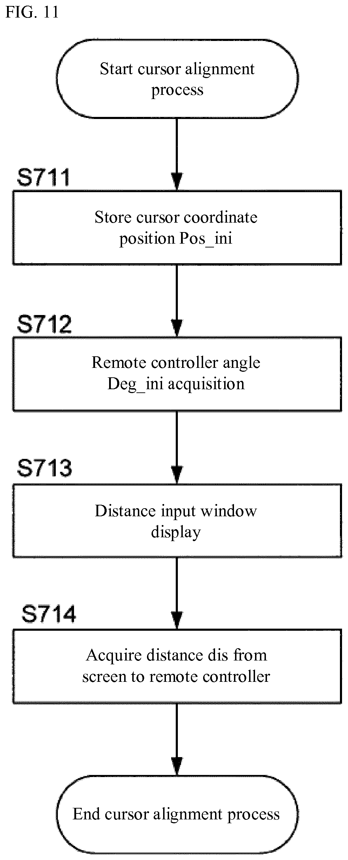

Next, a third example is described. The third example is a modified example of the cursor display control in the first embodiment described above. Specifically, for the cursor alignment process at step S7 in the processes illustrated in FIG. 4A, processes of the flowchart illustrated in FIG. 11 are performed.

As described above, it is assumed that the cursor alignment command operation is performed by the predetermined button in the operation unit 22 being pressed (Y at step S6). When the processes of FIG. 11 are started, first, at step S711, the controller 19 stores the cursor coordinate position Pos_ini, which is the current cursor display position, in the memory 20.

Here, as illustrated in FIG. 12, the user, while continuing to press the predetermined button of the remote controller 2, grips the remote controller 2 so the direction the remote controller 2 points in is positioned on a line extending perpendicularly from the screen from the current cursor display position C and releases pressing of the predetermined button. The direction the remote controller 2 points in is a direction extending perpendicularly forward from a front end of the remote controller 2.

Then, at step S712, the controller 25 of the remote controller 2 sends the remote controller angle Deg_ini, which is the angle of the remote controller 2 sensed by the gyro sensor 23, to the display device 1 via the communication unit 26 and the controller 19 acquires the remote controller angle Deg_ini.

Then, at step S713, the controller 19 instructs the display content generation unit 15 to display a predetermined input window on the display 11. By this, an input window is displayed on the display 11. Here, by performing an operation in the operation unit 22, the distance dis from the remote controller 2 to the screen is input in the input window. By this, at step S714, the controller 19 acquires the distance dis. In FIG. 12, the distance dis is a distance from the cursor position C to the position S of the remote controller 2. Input of the distance dis can be performed by direct input of a numerical value, selection from options, or the like.

At step S714, the cursor alignment process ends. According to the third embodiment of the present invention, afterward, when the cursor position computation process at step S16 (FIG. 4B) is executed, the processes illustrated in FIG. 6 are executed. In particular, at step S162, the cursor position is calculated as follows.

In FIG. 12, the position P is the position the remote controller 2 points to after the angle is changed. In FIG. 12,

tan($\angle$PSC = distance CP / distance dis, and $\angle$PSC = Deg_cur-Deg_ini. Therefore, the distance CP can be calculated; because the cursor position C is the cursor coordinate position Pos_ini, the position P can be specified. That is, the cursor position can be calculated as the position P.

With the third example, effects similar to those of the first embodiment may be achieved.

Although the disclosure has been described with respect to only a limited number of embodiments, those skilled in the art, having benefit of this disclosure, will appreciate that various other embodiments may be devised without departing from the scope of the present invention defined by the attached claims.

1 Display device
2 Remote controller
11 Display
12A, 12B Speaker
131 External input unit
132 Tuner
14 Audio/video receiver
15 Display content generation unit
16 Cursor generation unit
17 Audio generation unit
18 Pulse sound generation unit
19 Controller
20 Memory
21 Communication unit
22 Operation unit
23 Gyro sensor
24 Microphone
25 Controller
26 Communication unit
100 Display-device system
1A First display device
11A, 11B, 11C Display
15A, 15B, 15C Display content generation unit
16A, 16B, 16C Cursor generation unit
1B Second display device
1C Third display device
150 Multi-display
200 Display-device system
CS Cursor

**Claims**

1.  A display device, comprising:

    a display (11) adapted to display a cursor (CS);
    a remote controller (2) comprising a gyro sensor (23) adapted to detect an angle in a left-right direction of the remote controller (2) and comprising a predetermined operator, first and second signal output units that are disposed respectively in a first position (L) and a second position (R) of a main body of the display device, wherein the first position (L) and the second position (R) are separated by a predetermined distance (LR), wherein a first distance (LS) from the first signal output unit to the remote controller (2) is acquired based on a time for a signal output from the first signal output unit to reach the remote controller (2), and wherein a second distance (RS) from the second signal output unit to the remote controller (2) is acquired based on a time for a signal output from the second signal output unit to reach the remote controller (2),
    a controller (19) adapted to cause the display (11) to display the cursor (CS) based on information from the remote controller (2),
    wherein the controller (19) is adapted to acquire display position information (Pos_ini), angle information (Deg_ini), the first distance (LS), the second distance (RS) and detected current angle in the left-right direction (Deg_cur) of the remote controller (2),

wherein the display position information (Pos_ini) indicates a display position of the cursor (CS) of when the predetermined operator of the remote controller (2) is pressed, the remote controller (2) being oriented in a predetermined direction,

wherein the controller (19) is adapted to fix the display position of the cursor (CS) while the predetermined operator is pressed and the remote controller (2) is being oriented from the predetermined direction to the direction of the cursor being displayed,

wherein the angle information (Deg_ini) indicates an angle in a left-right direction of the remote controller (2) of when the remote controller (2) is oriented in the direction of the fixed cursor display position,

wherein the controller (19) is adapted to acquire the angle information (Deg_ini), the first distance (LS) and the second distance (RS) when pressing of the predetermined operator is released, and

wherein the controller (19) is adapted to control the display position of the cursor (CS) based on the position information (Pos_ini), the angle information (Deg_ini), the first distance (LS), the second distance (RS) and the detected current angle in the left-right direction (Deg_cur) of the remote controller (2).

2. The display device according to claim 1, wherein the controller (19), when a cursor position of the cursor to be moved based on the detected angle in a left-right direction is outside a display region of the display, is adapted to cause the display (11) to display the cursor (CS) near an outer edge of the display region.

3. The display device according to claim 2, wherein the controller is adapted to changes a display aspect of the cursor (CS) according to a distance between the cursor position and the outer edge.

4. The display device according to claim 3, wherein the display aspect is a method of flashing the cursor or a display color of the cursor.

5. The display device according to any one of claims 1 to 4, wherein the first and second signal output units are, respectively, first and second speakers (12A, 12B).

6. The display device according to any one of claims 1 to 5,

   wherein the display includes respective display regions of a plurality of display devices, and
   wherein the controller (19) is adapted to determine which display device among the plurality of display devices to display the cursor (CS) on according to the cursor position based on the detected angle in a left-right direction of the remote controller.

7. The display device according to claim 6,

   wherein a position in the display is defined as global coordinates,
   wherein a position in each display region is defined as local coordinates, and
   wherein the cursor position calculated as a position of the global coordinates is converted into a position of the local coordinates in the determined display device.

8. The display device according to any one of claims 1 to 7, wherein the controller (19) is adapted to cause a memory to store the display position information (Pos_ini) of the cursor (CS) associated with the angle information (Deg_ini) of the remote controller (2).

**Patentansprüche**

1. Anzeigevorrichtung, aufweisend

   eine Anzeige (11) zum Anzeigen eines Cursors (CS),
   eine Fernsteuerung (2), die einen Gyrosensor (23) aufweist, der dazu ausgebildet ist, einen Winkel in einer Links-Rechts-Richtung der Fernbedienung (2) zu erfassen und einen vorbestimmten Operator aufweist,
   erste und zweite Signalausgangseinheiten, die jeweils in einer ersten Position (L) und in einer zweiten Position (R) eines Hauptkörpers der Anzeigevorrichtung angeordnet sind, wobei die erste Position (L) und die zweite Position (R) in einen bestimmten Abstand (LR) voneinander beabstandet sind, wobei ein erster Abstand (LS) von der ersten Signalausgangseinheit zu der Fernsteuerung (2) auf der Basis der Zeit erfasst wird, die ein von der ersten Signalausgangseinheit ausgegebenes Signal benötigt, um die Fernsteuerung (2) zu erreichen, und wobei ein zweiter Abstand (RS) von der zweiten Signalausgangseinheit zu der Fernsteuerung (2) auf der Basis der Zeit erfasst wird, die ein von der zweiten Signalausgangseinheit ausgegebenes Signal benötigt, um die Fernsteuerung (2) zu erreichen,

eine Steuerung (19), die dazu ausgebildet ist, die Anzeige (11) zu veranlassen, den Cursor (CS) auf der Basis einer von der Fernsteuerung (2) ausgegebenen Information anzuzeigen,

wobei die Steuerung (19) dazu ausgebildet ist, eine Anzeigepositionsinformation (Pos_ini), eine Winkelinformation (Deg_ini), den ersten Abstand (LS), den zweiten Abstand (RS) und den detektierten aktuellen Winkel in Links-Rechts-Richtung (Deg_cur) der Fernsteuerung (2) zu erfassen,

wobei die Anzeigepositionsinformation (Pos_ini) eine Anzeigeposition des Cursors (CS) anzeigt, wenn der vorbestimmte Operator der Fernsteuerung (2) gedrückt ist, wobei die Fernsteuerung (2) in eine vorbestimmte Richtung ausgerichtet ist,

wobei die Steuerung (19) dazu ausgebildet ist, die Anzeigeposition des Cursors (CS) zu fixieren, während der vorbestimmte Operator gedrückt ist und die Fernsteuerung von der vorbestimmten Richtung in die Richtung des angezeigten Cursors ausgerichtet ist,

wobei die Winkelinformation (Deg_ini) einen Winkel in eine Links-Rechts-Richtung der Fernsteuerung (2) anzeigt, wenn die Fernsteuerung (2) in die Richtung der fixierten Cursoranzeigeposition ausgerichtet ist,

wobei die Steuerung (19) dazu ausgebildet ist, die Winkelinformation (Deg_ini), den ersten Abstand (LS) und den zweiten Abstand (RS) zu erfassen, wenn das Drücken des vorbestimmten Operators losgelassen wird, und

wobei die Steuerung (19) dazu ausgebildet ist, die Anzeigeposition des Cursors (CS) auf der Basis der Positionsinformation (Pos ini), der Winkelinformation (Deg_ini), des ersten Abstands (LS), des zweiten Abstands (RS) und des detektierten aktuellen Winkels in Links-Rechts-Richtung (Deg_cur) der Fernsteuerung (2) zu steuern.

2. Anzeigevorrichtung gemäß Anspruch 1, wobei die Steuerung (19) dazu ausgebildet ist, wenn eine Cursorposition des Cursors, der auf der Basis des detektierten Winkels in eine Links-Rechts-Richtung bewegt werden soll, außerhalb eines Anzeigebereichs der Anzeige liegt, die Anzeige (11) dazu zu veranlassen, den Cursor (CS) nahe eines äußeren Randes des Anzeigebereichs anzuzeigen.

3. Anzeigevorrichtung gemäß Anspruch 2, wobei die Steuerung dazu ausgebildet ist, eine Anzeigeform des Cursors (CS) entsprechend eines Abstands zwischen der Cursorposition und dem äußeren Rand zu ändern.

4. Anzeigevorrichtung gemäß Anspruch 3, wobei die Anzeigeform eine Blinkweise des Cursors oder eine Anzeigefarbe des Cursors ist.

5. Anzeigevorrichtung gemäß einem der Ansprüche 1 bis 4, wobei die erste und die zweite Signalausgabeeinheit erste bzw. zweite Lautsprecher (12A, 12B) sind.

6. Anzeigevorrichtung gemäß einem der Ansprüche 1 bis 5,

wobei die Anzeige jeweilige Anzeigebereiche einer Mehrzahl von Anzeigevorrichtungen aufweist, und

wobei die Steuerung (19) dazu ausgebildet ist, zu bestimmen, welche Anzeigevorrichtung aus der Mehrzahl von Anzeigevorrichtungen den Cursor (CS) entsprechend der Cursorposition auf der Basis des detektierten Winkels in einer Links-Rechts-Richtung der Fernsteuerung anzeigt.

7. Anzeigevorrichtung gemäß Anspruch 6,

wobei eine Position auf der Anzeige als globale Koordinaten definiert ist, wobei eine Position in jedem Anzeigebereich als lokale Koordinaten definiert ist, und

wobei die als Position der globalen Koordinaten berechnete Cursorposition in eine Position der lokalen Koordinaten in der bestimmten Anzeigevorrichtung umgewandelt wird.

8. Anzeigevorrichtung gemäß einem der Ansprüche 1 bis 7, wobei die Steuerung (19) dazu ausgebildet ist, einen Speicher dazu zu veranlassen, die mit der Winkelinformation (Deg_ini) der Fernsteuerung (2) assoziierte Anzeigepositionsinformation (Pos_ini) des Cursors (CS) zu speichern.

**Revendications**

1.  Dispositif d'affichage, comprenant :

    un écran (11) adapté pour afficher un curseur (CS) ;
    une télécommande (2) comprenant un capteur gyroscopique (23) adapté pour détecter un angle dans une direction gauche-droite de la télécommande (2) et comprenant un opérateur prédéterminé,
    des première et seconde unités d'émission de signal qui sont disposées respectivement dans une première position (L) et une seconde position (R) d'un corps principal du dispositif d'affichage, dans lequel la première position (L) et la seconde position (R) sont séparées par une distance prédéterminée (LR), dans lequel une première distance (LS) entre la première unité d'émission de signal et la télécommande (2) est acquise sur la base d'un temps mis par une émission de signal de la première unité d'émission de signal pour atteindre la télécommande (2), et dans lequel une seconde distance (RS) entre la seconde unité d'émission de signal et la télécommande (2) est acquise sur la base d'un temps mis par une émission de signal de la seconde unité d'émission de signal pour atteindre la télécommande (2),
    un contrôleur (19) adapté pour amener l'écran (11) à afficher le curseur (CS) sur la base d'informations provenant de la télécommande (2),
    dans lequel le contrôleur (19) est adapté pour acquérir des informations de position d'affichage (Pos_ini), des informations d'angle (Deg _ini), la première distance (LS), la seconde distance (RS) et l'angle actuel détecté dans la direction gauche-droite (Deg_cur) de la télécommande (2),
    dans lequel les informations de position d'affichage (Pos ini) indiquent une position d'affichage du curseur (CS) lorsque l'opérateur prédéterminé de la télécommande (2) est appuyé, la télécommande (2) étant orientée dans une direction prédéterminée,
    dans lequel le contrôleur (19) est adapté pour fixer la position d'affichage du curseur (CS) pendant que l'opérateur prédéterminé est appuyé et que la télécommande (2) est orientée depuis la direction prédéterminée vers la direction du curseur affiché,
    dans lequel les informations d'angle (Deg_ini) indiquent un angle dans une direction gauche-droite de la télécommande (2) lorsque la télécommande (2) est orientée dans la direction de la position d'affichage du curseur fixe,
    dans lequel le contrôleur (19) est adapté pour acquérir les informations d'angle (Deg_ini), la première distance (LS) et la seconde distance (RS) lorsque la pression de l'opérateur prédéterminé est relâchée, et
    dans lequel le contrôleur (19) est adapté pour commander la position d'affichage du curseur (CS) sur la base des informations de position (Pos_ini), des informations d'angle (Deg_ini), de la première distance (LS), de la seconde distance (RS) et de l'angle actuel détecté dans la direction gauche-droite (Deg_cur) de la télécommande (2).

2.  Dispositif d'affichage selon la revendication 1, dans lequel le contrôleur (19), lorsqu'une position de curseur du curseur à déplacer sur la base de l'angle détecté dans une direction gauche-droite est à l'extérieur d'une région d'affichage de l'écran, est adapté pour amener l'écran (11) à afficher le curseur (CS) près d'un bord extérieur de la région d'affichage.

3.  Dispositif d'affichage selon la revendication 2, dans lequel le contrôleur est adapté pour modifier un aspect d'affichage du curseur (CS) en fonction d'une distance entre la position du curseur et le bord extérieur.

4.  Dispositif d'affichage selon la revendication 3, dans lequel l'aspect d'affichage est un procédé de clignotement du curseur ou une couleur d'affichage du curseur.

5.  Dispositif d'affichage selon l'une quelconque des revendications 1 à 4, dans lequel les première et seconde unités d'émission de signal sont, respectivement, des premier et second haut-parleurs (12A, 12B).

6.  Dispositif d'affichage selon l'une quelconque des revendications 1 à 5,

    dans lequel l'écran comprend des régions d'affichage respectives d'une pluralité de dispositifs d'affichage, et
    dans lequel le contrôleur (19) est adapté pour déterminer sur quel dispositif d'affichage parmi la pluralité de dispositifs d'affichage afficher le curseur (CS) en fonction de la position du curseur sur la base de l'angle détecté dans une direction gauche-droite de la télécommande.

7.  Dispositif d'affichage selon la revendication 6,

**EP 3 401 766 B1**

dans lequel une position dans l'écran est définie comme coordonnées globales,
dans lequel une position dans chaque région d'affichage est définie comme coordonnées locales, et
dans lequel la position du curseur calculée comme une position des coordonnées globales est convertie en
une position de coordonnées locales dans le dispositif d'affichage déterminé.

8. Dispositif d'affichage selon l'une quelconque des revendications 1 à 7, dans lequel le contrôleur (19) est adapté
pour amener une mémoire à stocker les informations de position d'affichage (Pos_ini) du curseur (CS) associées
aux informations d'angle (Deg_ini) de la télécommande (2).

FIG. 1

FIG. 2

FIG. 3

Remote controller

2

FIG. 4A

Flowchart:

- S1: Power ON
- A (connector)
- S2: Power OFF ?
  - Y → C (connector)
  - N → S3
- S3: Cursor display command present?
  - N → A (connector)
  - Y → S4
- S4: Counter initialization: Cnt = 0
- S5: Cursor display in stored position
- D (connector)
- S6: Cursor alignment command present?
  - N → B (connector)
  - Y → S7
- S7: Cursor alignment
- B (connector)
- S25: Power OFF
- C (connector) → S25

FIG. 4B

```
                                              ( B )
                                                │
                                                ▼
                                        S8  ◇ Cursor non-display
                              Y ◄─────────── command present? ◇
                              │                  │ N
                              ▼                  ▼
              S9  ┌──────────────────┐   S10 ◇ Power OFF ◇
                  │  Cursor non-display│   Y ◄──────────
                  └──────────────────┘   │        │ N
                          │              ▼        ▼
                        ( A )          ( C )  S11 ◇ Remote controller angle
                                      N ◄──────── change? ◇
                                      │              │ Y
                                      ▼              ▼
            S12 ┌──────────────────┐     S15 ┌──────────────────┐
                │ Counter addition: │         │ Counter initialization:│
                │   Cnt = Cnt+1     │         │      Cnt = 0     │
                └──────────────────┘         └──────────────────┘
                          │              S16 ┌──────────────────┐
                          ▼                  │  Cursor position │
            S13 ◇ Cnt < threshold? ◇         │   computation    │
          N ◄──────────────                  └──────────────────┘
          │              │ Y            S17 ┌──────────────────┐
          ▼              ▼                  │   Move cursor to │
  S14 ┌──────────────┐ ( B )               │ computation result│
      │Cursor non-display│                 └──────────────────┘
      └──────────────┘               S18 ┌──────────────────┐
              │                           │Store cursor position│
            ( A )                         └──────────────────┘
                                                  │
                                                  ▼
                                    S19 ◇ Cursor non-display
                          Y ◄──────────── command present ? ◇
                          │                     │ N
                          ▼                     ▼
        S20 ┌──────────────────┐    S21 ◇ Power OFF ? ◇
            │  Cursor non-display│  Y ◄──────────
            └──────────────────┘  │          │ N
                    │             ▼          ▼
                  ( A )         ( C )      ( D )
```

FIG. 5

```
            ┌─────────────────────────┐
            │   Start cursor alignment │
            │         process          │
            └─────────────────────────┘
                         │
                         ▼
S71  ┌──────────────────────────────────────┐
     │       Store cursor coordinate         │
     │        position Pos_ini               │
     └──────────────────────────────────────┘
                         │
                         ▼
S72  ┌──────────────────────────────────────┐
     │       Acquire remote controller       │
     │         angle Deg_ini                 │
     └──────────────────────────────────────┘
                         │
                         ▼
S73  ┌──────────────────────────────────────┐
     │          Pulse sound output           │
     └──────────────────────────────────────┘
                         │
                         ▼
S74  ┌──────────────────────────────────────┐
     │       Acquire distance dis from       │
     │       screen to remote controller     │
     └──────────────────────────────────────┘
                         │
                         ▼
            ┌─────────────────────────┐
            │  End cursor alignment process │
            └─────────────────────────┘
```

FIG. 6

```
          ╭─────────────────────────╮
          │   Start cursor position  │
          │       computation        │
          ╰─────────────────────────╯
                      │
                      ▼
S161  ┌─────────────────────────────┐
      │    Acquire current remote    │
      │   controller angle Deg_cur   │
      └─────────────────────────────┘
                      │
                      ▼
S162  ┌─────────────────────────────┐
      │ Calculate cursor position after move by │
      │  Pos_ini, Deg_ini, Deg_cur, dis │
      └─────────────────────────────┘
                      │
                      ▼
S163        ╱─────────────────────╲          N
           ╱  Cursor position after move  ╲──────┐
           ╲   within screen ends?         ╱      │
            ╲─────────────────────╱        │
                      │ Y                   │
                      ▼                     ▼
S164 ┌─────────────────────┐   S165 ┌─────────────────────┐
     │ Cursor position =   │        │ Cursor position =   │
     │ calculation result  │        │ cursor position     │
     │                     │        │ immediately prior   │
     └─────────────────────┘        └─────────────────────┘
                 │                             │
                 ◄─────────────────────────────┘
                 │
                 ▼
          ╭─────────────────────────╮
          │    End cursor position   │
          │       computation        │
          ╰─────────────────────────╯
```

FIG. 7A

FIG. 7B

FIG. 8

FIG. 12

FIG. 9

**Second display device**

19B      15B      1B   150

Controller

Display content generation unit   11B

16B

Cursor generation unit  ⊕  Display

**First display device**   131    14      15A      1A

External input unit   Audio/video receiver   Display content generation unit   11A

Tuner

132    20     19A   Cursor generation unit   16A ⊕   Display

Memory   Controller   17

Audio generation unit

18 Pulse sound generation unit   ⊕

21

Comm. unit

12A,12B   Speaker

**Third display device**   19C      15C      1C

Controller

Display content generation unit   11C

16C

Cursor generation unit   ⊕   Display

FIG. 10A

**S30**
Power ON

C

**S65**
Power OFF

A

**S31**
Power OFF?

Y → C

N

**S32**
Cursor display command present?

N → A

Y

**S33**
Counter initialization: Cnt = 0

**S34**
Determine display monitor from cursor display position (global)

**S35**
Disp. mon. cursor: enable
Non-disp. mon. crsr.: disable

**S36**
Convert cursor disp. pos. into pos. within disp. monitor (local)

**S37**
Cursor display in stored position

D

**S38**
Cursor alignment command present?

N → B

Y

**S39**
Cursor alignment

B

FIG. 10B

FIG. 11

```
                    ╭─────────────────────╮
                    │  Start cursor alignment │
                    │       process           │
                    ╰─────────────────────╯
                               │
                               ▼
S711  ┌───────────────────────────────────────┐
      │        Store cursor coordinate         │
      │         position Pos_ini               │
      └───────────────────────────────────────┘
                               │
                               ▼
S712  ┌───────────────────────────────────────┐
      │        Remote controller angle         │
      │        Deg_ini acquisition             │
      └───────────────────────────────────────┘
                               │
                               ▼
S713  ┌───────────────────────────────────────┐
      │        Distance input window           │
      │              display                   │
      └───────────────────────────────────────┘
                               │
                               ▼
S714  ┌───────────────────────────────────────┐
      │        Acquire distance dis from       │
      │      screen to remote controller       │
      └───────────────────────────────────────┘
                               │
                               ▼
              ╭─────────────────────────────╮
              │  End cursor alignment process │
              ╰─────────────────────────────╯
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014204240 A